# EUROPÄISCHE PATENTANMELDUNG

(11) **EP 2 194 364 A2**
(43) Veröffentlichungstag der Anmeldung: **09.06.2010**
(21) Anmeldenummer: 09014287.8
(22) Anmeldetag: 16.11.2009
(51) Int. Cl.: G01G 19/414, G01G 23/00, G01G 23/01

(54) **Waage**

(30) Priorität: 02.12.2008 DE 102008060176
(71) Anmelder: Bundesrepublik Deutschland, vertr. d.d. Bundes- ministerium f. Wirtschaft- und Technologie, dieses vertr. d.d. Präs. d. Phys.-Techn. Bundesanstalt, 38116 Braunschweig (DE)
(72) Erfinder: Schrader, Thorsten, 38304 Wolfenbüttel (DE); Münter, Klaus, 38116 Braunschweig (DE); Daneschnejad, Ahmad, 381100 Braunschweig (DE)
(74) Vertreter: Plöger, Jan Manfred

(57) **Zusammenfassung**

Die Erfindung betrifft eine Waage zum Erfassen einer Messgröße (m), mit einem Messsensor (14) für die Messgröße (m), der so ausgebildet ist, dass ein hochfrequentes elektromagnetisches Feld (30) von außen einkoppeln und ein Messergebnis für die Messgröße verfälschen kann, wobei eine Feldstärke (E) des hochfrequenten elektromagnetischen Felds (30) unterhalb einer Maximal-Feldstärke (Eₘₐₓ) das Messergebnis um einen Betrag verfälscht, der unter einem Toleranzwert liegt. Erfindungsgemäß ist mindestens ein Hochfrequenzsensor (24) zum Erfassen einer aus dem hochfrequenten elektromagnetischen Feld (30) resultierenden Größe (U₂₆) vorgesehen, wobei der mindestens eine Hochfrequenzsensor (24) so mit dem Messsensor (14) gekoppelt ist, dass jedes Überschreiten der vorgegebenen Maximal-Feldstärke (Eₘₐₓ) detektierbar ist.

## Beschreibung

Die Erfindung betrifft eine Waage zum Erfassen einer Messgröße, mit einem Messsensor für die Messgröße, der so ausgebildet ist, dass ein hochfrequentes elektromagnetisches Feld von außen einkoppeln und ein Messergebnis für die Messgröße verfälschen kann, wobei eine Feldstärke des hochfrequenten elektromagnetischen Felds unterhalb einer Maximal-Feldstärke das Messergebnis um einen Betrag verfälscht, der unter einem Toleranzwert liegt.

Waagen müssen nach EN 45501 eine Prüfung auf elektromagnetische Verträglichkeit durchlaufen, damit sie eine Bauartzulassung erhalten können. Die Bauartzulassung ist Voraussetzung für eine Eichung, die ihrerseits Voraussetzung dafür ist, dass die Waage im Handelsbetrieb eingesetzt werden kann.

Bei der Bauartzulassung wird gefordert, dass ein hochfrequentes elektrisches Feld mit einer Feldstärke von 3 V/m zu einem Messfehler führt, der unterhalb einer vorgegebenen Schwelle liegt.

Es hat sich herausgestellt, dass etliche dieser Waagen zwar eine Bauartzulassung erhalten können, dennoch aber beträchtliche Messfehler aufweisen, wenn sich Geräte in der Umgebung befinden, die hochfrequente elektromagnetische Strahlung abgeben. Es ist möglich, derartige Waagen gegen elektromagnetische Strahlung zu schirmen, was auch als härten bezeichnet wird. Nachteilig hieran ist jedoch, dass eine Nachrüstung bestehender Waagen damit schwierig ist.

Aus der EP 0 261 951 ist eine Waage bekannt, bei der elektromagnetische Felder um den Messsensor herumgeleitet werden. Nachteilig hieran ist, dass die Einstreuungen zwar gering sein können, dass aber nicht ausgeschlossen ist, dass die eingestreuten elektromagnetischen Wellen zu einem tolerablen Messfehler führen. Das aber ist eine Voraussetzung, um die Waage eichen zu können.

Der Erfindung liegt die Aufgabe zugrunde, eine Waage anzugeben, diesowohl einfach aufgebaut als auch eichfähig ist.

Die Erfindung löst das Problem durch eine gattungsgemäße Waage, die mindestens einen Hochfrequenzsensor zum Erfassen einer aus dem hochfrequenten elektromagnetischen Feld resultierenden Größe umfasst, wobei der mindestens eine Hochfrequenzsensor so mit dem Messsensor gekoppelt ist, dass jedes Überschreiten der vorgegebenen Maximal-Feldstärke detektierbar ist. Vorteilhaft an der Waage ist, dass eine Kapselung derjenigen Komponenten entbehrlich ist, auf die elektromagnetische Strahlung einen verfälschten Einfluss hat. Dadurch wird die Waage besonders einfach.

Vorteilhaft ist zudem, dass bestehende Waagen einfach nachgerüstet werden können. Dazu müssen lediglich Hochfrequenzsensoren an die Stellen angebracht werden, an denen der Messsensor empfindlich auf elektromagnetische Wellen reagiert.

Im Rahmen der vorliegenden Beschreibung wird unter dem Messsensor insbesondere jede Vorrichtung verstanden, die ausgebildet ist, um einen physikalischen Messwert zu generieren. Der Messsensor umfasst dabei ein Messelement, das eine physikalische Größe in ein elektrisches Signal umsetzt, und eine Auswerteschaltung, die die elektrische Größe verarbeitet und das Messergebnis ausgibt.

Unter dem Merkmal, dass der mindestens eine Hochfrequenzsensor so mit dem Messsensor gekoppelt ist, dass jedes Überschreiten der Maximal-Feldstärke detektierbar ist, wird insbesondere verstanden, dass der Hochfrequenzsensor so ausgebildet ist, dass das Vorhandensein eines elektromagnetischen Felds oder von Einkopplungen zwischen 10 MHz und 6 GHz mit einer Feldstärke erfassen kann, die einen vorgegebenen Schwellenwert überschreitet. Es wird dadurch sichergestellt, dass es nicht möglich ist, den Messsensor durch Bestrahlen mit einer beliebigen elektromagnetischen Welle in diesem Frequenzbereich so zu stören, dass das Messergebnis außerhalb des Toleranzbereichs liegt, ohne dass der Hochfrequenzsensor die Stärke eines derartigen elektromagnetischen Strahls erfasst. Auf diese Weise wird erreicht, dass die Waage entweder ein korrektes Messergebnis anzeigt oder aber eine Fehlermeldung bzw. kein Ergebnis.

Der Erfindung liegt die Erkenntnis zugrunde, dass es zwar möglich ist, die Waage so zu schirmen, dass in der Umgebung vorkommende elektromagnetische Felder oberhalb des Schwellenwerts zu keinem signifikanten Messfehler führt, dass es aber vorteilhaft ist, eine Beeinflussung der Waage durch die Felder zu tolerieren und statt dessen die Ausgabe des Messergebnisses zu unterdrücken.

Gemäß einer bevorzugten Ausführungsform weist die Waage ein Gehäuse auf, das den Messsensor zumindest teilweise umgibt, wobei der mindestens eine Hochfrequenzsensor ausgebildet ist zum Detektieren einer Einstreuung des hochfrequenten elektromagnetischen Felds in das Gehäuse. Dadurch wird sichergestellt, dass alle im Gehäuse angeordneten Komponenten entweder durch elektromagnetische Wellen nicht gestört werden oder aber der Hochfrequenzsensor eine Fehlermeldung ausgeben kann.

Insbesondere ist der Hochfrequenz-Detektor eingerichtet zum Detektieren einer jeglichen Einstreuung von hochfrequentem elektromagnetischen Feldern, die eine vorgegebene Mindeststärke übersteigen. Dies ist unabhängig davon, wie das Feld in das Gehäuse einstreut. So ist es beispielsweise möglich, dass zumindest ein Hochfrequenzsensor so angeordnet ist, dass er das Durchtreten einer elektromagnetischen Welle durch einen Spalt oder eine sonstige Öffnung im Gehäuse detektieren kann.

Besonders bevorzugt ist der Hochfrequenzsensor im Gehäuse angeordnet. Besonders günstig ist es, wenn das Gehäuse so ausgebildet ist, dass ein Öffnen stets zu solchen Spuren führt, die das Öffnen des Gehäuses nachweisbar machen. Auf diese Weise ist sichergestellt, dass der Hochfrequenzsensor nicht unbemerkt manipuliert werden kann.

Bevorzugt umfasst der Messsensor mindestens ein Messelement zum Umwandeln der Messgröße in eine elektrische Größe und eine Auswerteeinheit, die mit dem Messelement über ein elektrisches Kabel verbunden und ausgebildet ist zum Auswerten der elektrischen Größe, wobei zumindest ein Hochfrequenzsensor ausgebildet ist zum Erfassen einer Einstreuung des hochfrequenten elektromagnetischen Felds in das elektrische Kabel. Auf diese Weise ist sichergestellt, dass eine korrekt aus der Messgröße erzeugte elektrische Größe nicht durch das elektromagnetische Feld auf dem Weg über das elektrische Kabel verfälscht wird.

Bevorzugt umfasst die Waage Hochfrequenzsensoren, die so angeordnet sind, dass Einstreuungen in alle Kabel erfasst werden können, die zur Waage oder von ihr weg verlaufen. Beispielsweise sind derartige Kabel Netzanschluss- oder Datenkabel.

Bevorzugt ist zumindest einer der Hochfrequenzsensoren ein kapazitiver Sensor. Das ist besonders dann vorteilhaft, wenn der Messsensor zeitlich langsam unveränderliche Größen erfasst und die kapazitive Kopplung die eigentliche Messung der Messgröße nicht beeinflusst. So können auch elektromagnetische Felder mit geringer Feldstärke sicher detektiert werden.

Gemäß einer bevorzugten Ausführungsform umfasst die Waage mindestens zwei Hochfrequenzsensoren, insbesondere aber auch drei, vier, fünf oder mehr Hochfrequenzsensoren, die in einer logischen ODER-Schaltung miteinander verbunden sind. Insbesondere sind alle Hochfrequenzsensoren in dieser ODER-Schaltung miteinander verbunden. Hierdurch ist sichergestellt, dass bereits dann das Vorliegen einer elektromagnetischen Einstreuung detektiert werden kann, wenn nur einer der Hochfrequenzsensoren ein entsprechendes Signal liefert.

Besonders bevorzugt sind die Hochfrequenzsensoren diversitär, das heißt, dass sich zumindest zwei der Hochfrequenzsensoren hinsichtlich ihres Sensorprinzips unterscheiden. Das führt zu einer besonders hohen Wahrscheinlichkeit, dass die Einstreuung des elektromagnetischen Feldes sicher erkannt werden kann.

Bevorzugt sind die Hochfrequenzsensoren mit einer Auswerteschaltung verbunden, die eingerichtet ist, um dann, wenn ein Überschreiten der Maximal-Feldstärke detektiert worden ist, ein Ausgeben eines Messwerts für eine vorgegebene Zeit nach dem Ende der Störung zu unterdrücken. Eine derartige Zeitspanne kann beispielsweise größer sein als 1 Sekunde. Es wird dann, wenn eine Störung aufgrund einer elektromagnetischen Welle detektiert worden ist, das Ausgeben eines Messsignals so lange wie die Störung dauert unterdrückt. Es ist zudem möglich, die Auswerteschaltung so auszubilden, dass sie dann, wenn einer der Hochfrequenzsensoren ein unzulässig hohes elektromagnetisches Feld detektiert hat, eine Erdungsroutine oder ein Reset, also ein Rücksetzen auf einen definierten Basiszustand durchführt. So werden etwaig vorhandene Ladungen entfernt, die durch das elektromagnetische Feld in der Waage induziert wurden.

Bevorzugt umfasst zumindest einer der Hochfrequenzsensoren eine Antenne und eine hochohmige Gleichrichterschaltung. Durch die passive Schaltung wird ein besonders geringer Energieverbrauch erreicht.

In einer bevorzugten Ausführungsform umfasst die Waage eine Kommunikationsvorrichtung zum Ausgeben eines Signals, das die von dem mindestens einen Hochfrequenzsensor erfassten Messdaten kodiert. So können einstreuende Felder überwacht werden und erlauben das Erkennen von Manipulationsversuchen.

Bevorzugt beträgt die Maximalfeldstärke 3 V/m, so dass die Anforderungen für eine Bauartzulassung erfüllt werden.

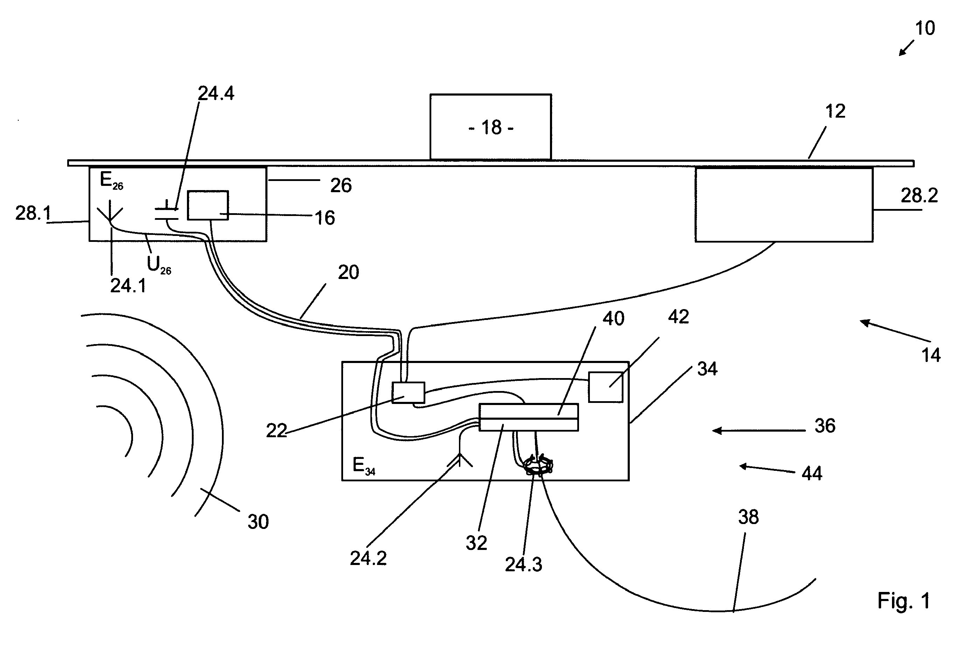

Im Folgenden wird die Erfindung anhand der beigefügten Zeichnungen näher erläutert. Dabei zeigt
- Figur 1: eine schematische Ausführungsform einer erfindungsgemäßen Waage.

Figur 1 zeigt eine schematische Ansicht einer Waage 10, die eine Probenaufnahme 12 und einen Messsensor 14 umfasst. Der Messsensor 14 besitzt ein Messelement 16 in Form eines Dehnungsmessstreifens, so dass eine Masse m eines zu wägenden Objekts 18 bestimmt werden kann. Die Masse m stellt die von der Waage 10 zu erfassende Messgröße dar. In Abhängigkeit von der Masse m wird das Messelement 16 deformiert, so dass eine Änderung eines Widerstands R resultiert. Der Widerstand R stellt eine elektrische Größe dar, die über ein elektrisches Kabel 20 von einer Auswerteeinheit 22 erfasst wird. Das Messelement 16 ist zusammen mit einem Hochfrequenzsensor 24.1 in einem Gehäuse 26 einer Sensoreinheit 28.1 untergebracht. Eine zweite Sensoreinheit 28.2 ist gleich aufgebaut.

Wenn ein elektromagnetisches Feld 30 auf das Gehäuse 26 strahlt, so kann dies das Messelement 16 so beeinflussen, dass die Auswerteeinheit 22 einen fehlerhaften Wert für die Masse m des Objekts 18 ermittelt. Das hochfrequente elektromagnetische Feld 30 hat beispielsweise eine Frequenz zwischen 10 MHz und 6 GHz.

Die Stärke E des Feldes 30 wird von dem Hochfrequenzsensor 24.1 zumindest implizit gemessen, das heißt, dass der Hochfrequenzsensor 24.1 so ausgebildet ist, dass ein Überschreiten einer kritischen Feldstärke E_{26,max} innerhalb des Gehäuses 26 sicher erkannt werden kann. Der Hochfrequenzsensor 24.1 umfasst eine kleine Antenne und eine passive, hochohmige Gleichrichterschaltung. Beispielsweise wird eine Zweifach-Schottky-Diode in Verdopplerschaltung verwendet. Als Zweifach-Schottky-Diode kann beispielsweise der Typ BAT62-W von Infineon verwendet werden.

Die Empfindlichkeit jedes Hochfrequenzsensors lässt sich durch die jeweilige Verstärkerstufe einstellen, bevor das Signal zum Addierer 32 gelangt. Die einzelnen Hochfrequenzsensoren sind nahezu rückwirkungsfrei in dem Addierer 32 zusammengeführt.

Über das elektrische Kabel 20 gelangt die vom Hochfrequenzsensor 24.1 erzeugte elektrische Größe, nämlich eine Spannung U₂₆, an den Addierer 32. Der Hochfrequenzsensor 24.1 ist ein passiver Hochfrequenzsensor, der eine Signal-Gleichspannung U₂₆ im Millivoltbereich liefert. Diese Spannung U₂₆ wird von einem nicht eingezeichneten Verstärker vorverstärkt. Der Addierer 32 ist als Spannungsverstärker ausgebildet und arbeitet als Operationsverstärker in konventioneller analoger Addierer-Schaltung. Als Operationsverstärker kann beispielsweise der Typ AD8628 von Analog Devices, Incorporated verwendet werden. Zur Stromversorgung ist der Addierer 32 mit einer nicht eingezeichneten Energieversorgung, beispielsweise einer Batterie oder einem Netzteil verbunden.

Der Addierer 32 ist zudem mit einem zweiten Hochfrequenzsensor 24.2 verbunden, der die Feldstärke E₃₄ in einem Gehäuse 34 einer Grundeinheit 36 misst.

Der Addierer 32 ist außerdem mit einem Hochfrequenz-Stromwandler 24.3 verbunden. Der Hochfrequenz-Stromwandler 24.3 stellt ebenfalls einen Hochfrequenzsensor dar. Da Hochfrequenz-Energie nicht nur in Form von feldgekoppelten Oberflächenströmen auf dem Gehäuse 34 auf Komponenten im Gehäuse 34 einkoppeln kann, sondern auch als Störstrom auf einer Stromversorgungsleitung 38, wird das Einkoppeln des Felds 30 mit dem Hochfrequenz-Stromwandler 24.3 überwacht. Der Hochfrequenzsensor 24.3 ist so eingerichtet, dass auch ein gepulstes Feld 30 erkannt werden kann. Geeignet sind beispielsweise Übertrager-Ferritkerne mit 10 Windungen aus 0,2 mm starken Kupferlackdraht.

Im Gehäuse 26 der Sensoreinheit 28.1 ist zudem ein kapazitiver Hochfrequenzsensor 24.4 angeordnet, dessen Signale ebenfalls über das Kabel 20 zum Addierer 32 geleitet werden.

Alle Signale der Hochfrequenzsensoren 24 werden im Addierer 32 verstärkt und einem integrierten Schwellenwertdetektor 40 zugeleitet. Der Schwellenwertdetektor 40 ist ein CMOS-Schmitt-Träger mit fest vorgegebenen Schaltschwellen. Die Hysterese des Schwellenwertdetektors 40 verhindert auch bei langsam veränderlicher Feldstärke E des Felds 30 ein übermäßig starkes Schwanken des Ausgangssignals.

Der Schwellenwertdetektor 40 ist als logisches ODER-Gatter ausgebildet. Übersteigt die elektrische Feldstärke E an einer Stelle, an der einer der Hochfrequenzsensoren 24 angeordnet ist, eine vorgegebene Schwelle Eₘₐₓ, so wird ein entsprechendes Signal an die Auswerteeinheit 22 gesendet, die daraufhin eine Ausgabe an eine Anzeige 42 des gemessenen Ergebnisses unterbindet und statt dessen eine Fehlermeldung ausgibt.

Die Hochfrequenzsensoren 24 sind so ausgebildet, dass immer dann, wenn die elektrische Feldstärke E an irgendeiner Stelle so hoch wird, dass der jeweilige, gegebenenfalls für verschiedene Komponenten der Waage unterschiedliche Schwellenwert Eₘₐₓ überschritten und eine vorgegebene Messgenauigkeit für das Messergebnis für die Masse m nicht erreicht wird, ein zugehöriger Schwellenwert im Schwellenwertdetektor 40 überschritten wird, so dass kein Messergebnis ausgegeben wird. In der Auswerteeinheit 22 ist zudem eine Verzögerungsschaltung vorhanden, die dann, wenn die entsprechend kritische Feldstärke Eₘₐₓ wieder unterschritten wird, zunächst eine vorgegebene Zeitspanne T abwartet, bevor erneut die gemessene Masse m des Objekts 18 angezeigt wird.

Die Auswerteeinheit 22, der Addierer 32 und der Schwellenwertdetektor sind Teile einer Auswerteschaltung 44 der Waage.

### Bezugszeichenliste

- 10: Waage
- 12: Probenaufnahme
- 14: Messsensor
- 16: Messelement
- 18: Objekt

- 20: Kabel
- 22: Auswerteeinheit
- 24: Hochfrequenzsensor
- 26: Gehäuse
- 28: Sensoreinheit

- 30: Feld
- 32: Addierer
- 34: Gehäuse
- 36: Grundeinheit
- 38: Stromversorgungsleitung

- 40: Schwellenwertdetektor
- 42: Anzeige
- 44: Auswerteschaltung

- m: Masse
- R: Widerstand
- E: Feldstärke
- Eₘₐₓ: Schwellenwert
- U: Spannung
- PI/be:

## Patentansprüche

1. Waage zum Erfassen einer Messgröße (m), mit
(a) einem Messsensor (14) für die Messgröße (m),
- der so ausgebildet ist, dass ein hochfrequentes elektromagnetisches Feld (30) von außen einkoppeln und ein Messergebnis für die Messgröße verfälschen kann,
- wobei eine Feldstärke (E) des hochfrequenten elektromagnetischen Felds (30) unterhalb einer Maximal-Feldstärke (Eₘₐₓ) das Messergebnis um einen Betrag verfälscht, der unter einem Toleranzwert liegt,
**gekennzeichnet durch**
(b) mindestens einen Hochfrequenzsensor (24) zum Erfassen einer aus dem hochfrequenten elektromagnetischen Feld (30) resultierenden Größe (U₂₆),
(c) wobei der mindestens eine Hochfrequenzsensor (24) so mit dem Messsensor (14) gekoppelt ist, dass jedes Überschreiten der vorgegebenen Maximal-Feldstärke (Eₘₐₓ) detektierbar ist.

2. Waage nach Anspruch 1, **gekennzeichnet durch**
- ein Gehäuse (26), das den Messsensor (14) zumindest teilweise umgibt,
- wobei der mindestens eine Hochfrequenzsensor (24) zum Detektieren einer Einstreuung des hochfrequenten elektromagnetischen Felds (30) in das Gehäuse (26) ausgebildet ist.

3. Waage nach einem der vorstehenden Ansprüche, **dadurch gekennzeichnet, dass** der Hochfrequenzsensor (24) im Gehäuse (26) angeordnet ist.

4. Waage nach einem der vorstehenden Ansprüche, **dadurch gekennzeichnet, dass**
(i) der Messsensor (14)
- mindestens ein Messelement (16) zum Umwandeln der Messgröße in eine elektrische Größe (R) und
- eine Auswerteeinheit (22), die
mit dem Messelement (16) über ein elektrisches Kabel (20) verbunden ist und
ausgebildet ist zum Auswerten der elektrischen Größe
aufweist, und
(ii) zumindest ein Hochfrequenzsensor (24) ausgebildet ist zum Erfassen einer Einstreuung des hochfrequenten elektromagnetischen Felds (30) in das elektrische Kabel (20).

5. Waage nach einem der vorstehenden Ansprüche, **dadurch gekennzeichnet, dass** zumindest einer der Hochfrequenzsensoren (24) ein kapazitiver Sensor ist.

6. Waage nach einem der vorstehenden Ansprüche, **gekennzeichnet durch** mindestens zwei Hochfrequenzsensoren (24), die in einer logischen ODER-Schaltung miteinander verbunden sind.

7. Waage nach Anspruch 6, **dadurch gekennzeichnet, dass** sich zumindest zwei der Hochfrequenzsensoren (24) hinsichtlich ihres Sensorprinzips unterscheiden.

8. Waage nach einem der vorstehenden Ansprüche, **dadurch gekennzeichnet, dass** die Hochfrequenzsensoren (24) mit einer Auswerteschaltung (44) verbunden sind, die eingerichtet ist, um dann, wenn ein Überschreiten der Maximal-Feldstärke (Eₘₐₓ) detektiert worden ist, ein Ausgeben eines Messwerts für eine vorgegebene Zeit zu unterdrücken.

9. Waage nach einem der vorstehenden Ansprüche, **dadurch gekennzeichnet, dass** zumindest einer der Hochfrequenzsensoren (24)
- eine Antenne und
- eine hochohmige Gleichrichterschaltung umfasst.

10. Waage nach einem der vorstehenden Ansprüche, **gekennzeichnet durch** eine Kommunikationsvorrichtung zum Ausgeben eines Signals, das die von dem mindestens einen Hochfrequenzsensor (24) erfassten Messdaten kodiert.

11. Waage nach einem der vorstehenden Ansprüche, **dadurch gekennzeichnet, dass** die Maximal-Feldstärke (Eₘₐₓ) mindestens 3 Volt pro Meter, insbesondere 10 Volt pro Meter, beträgt.
